# EUROPEAN PATENT APPLICATION

(11) **EP 4 847 770 A1**
(43) Date of publication of application: **02.12.2026**
(21) Application number: 25189499.4
(22) Date of filing: 15.07.2025
(51) Int. Cl.: F03D 80/50

(54) **A SYSTEM FOR LOCKING A BLADE IN A PRE-DETERMINED ORIENTATION IN A WIND TURBINE GENERATOR**

(30) Priority: 27.05.2025 IN 202511050882
(71) Applicant: RE Technologies GmbH, 22083 Hamburg (DE)
(72) Inventor: REDDY M., Shankar, 560066 Bengaluru (IN)
(74) Representative: Buzzi, Notaro & Antonielli d'Oulx S.p.A.

(57) **Abstract**

The present invention provides a system for locking the blades of a wind turbine generator (WTG) in a predetermined orientation, ensuring stability and proper positioning during maintenance or operation. The system comprises a rotor lock disc (205), the rotor lock disc (205) includes a plurality of position marker means (201, 202, 203) each corresponding to a blade (A, B, C) of the wind turbine. The position marker means (201, 202, 203) are placed in the viscinity of rotor-lock holes (211, 212, 213) on the rotor lock disc (205), with varying distances therebetween. Further, the system includes a trigger means (312) which is movably mounted on a mounting means, with multiple pre-determined unique locations. At each pre-determined unique location, one of the pre-determined position marker means (201, 202, 203) aligns with the trigger means (312). When this alignment occurs, the blade corresponding to the groove is in the pre-determined orientation and the locking pin and locking hole are aligned triggering a locking of the rotor lock disc (205).

## Description

### FIELD OF INVENTION:

The present invention relates to a system for locking a blade in a pre-determined orientation in a wind turbine generator.

### BACKGROUND OF THE INVENTION:

The following background discussion includes information that may be useful in understanding the present invention. It is not an admission that any of the information provided herein is prior art or relevant to the presently claimed invention, or that any publication expressly or implicitly referenced is prior art.

Wind turbines are widely used to harness wind energy and convert it into electrical power. During maintenance, installation, or uninstallation activities, it is critical to prevent the rotor blades from rotating to ensure the safety of personnel and the structural integrity of the equipment. To achieve this, rotor locking mechanisms are employed to mechanically secure the rotor in a fixed position.

A commonly used rotor locking method involves a pin-and-hole arrangement, where a lock pin is inserted into a corresponding hole in a rotor lock disc. This locking action is typically facilitated by a screw jack mechanism. While this concept is mechanically straightforward, it poses several practical challenges that affect operational efficiency and safety.

One of the primary challenges lies in the precise alignment of the lock pin with the hole in the rotor disc. The rotor must be rotated with high accuracy to bring the locking hole into alignment with the pin, requiring continuous observation and fine adjustments. This alignment process is time-consuming, prone to human error, and usually demands additional manpower to monitor the position and engage the lock at the correct moment.

Additionally, accurate identification of the correct locking position is not inherently known or visually obvious to the operator. Without clear feedback mechanisms, operators may struggle to determine where and when the locking should occur, leading to misalignment, delays, and increased safety risks.

Importantly, during certain maintenance or uninstallation procedures, it is necessary for a specific blade (from the usual 3 blades) to be oriented in a predefined position-typically vertical (pointing downward)-at the time of rotor locking. Existing systems generally lack intelligent control or flexibility to allow selection of which blade should be in the vertical position at the time of locking. For example, U.S**.** Patent No. US10428795B2 discloses a braking method applied at the rotor level by positioning the blade at an end position. In this invention, the end position is predetermined, the rotor is braked in regulated fashion to a stopped position associated with the end position, and for positioning for the predetermined end position the rotor is braked in an automated procedure until stopped at the stopped position. However, this braking method and system does not utilize a rotor lock disc or a mechanical pin engagement, making it unsuitable for compatibility with existing lock disc-based systems commonly found in operational wind turbines. Further, the said system and method does not provide the granular control over the location of each.

Further, US7397145B2 discloses a process for the operation of a wind energy installation by which a rotor of the wind energy installation is decelerated and locked in a desired rotational position. For locking the rotor at desired rotational position, a marker and sensor-based system is used to detect alignment for rotor locking. However, it is limited in functionality as it only supports locking based on the first detected marker, corresponding to a single blade. In configurations such as three-blade turbines, this system cannot intelligently identify or allow the operator to select which of the three blades should be brought to the vertical locking position. This restricts operational flexibility and increases the likelihood of incorrect locking sequences, which can affect downstream maintenance procedures.

Therefore, there exists a need for an efficient, automatic rotor locking system that reduces the requirement for a manual observation and fine alignment, thus minimizing the involvement of the manpower and operational downtime.

There is also a need for an efficient, automatic rotor locking system that enables intelligent and flexible selection of a specific blade to be positioned vertically during locking, ensuring accurate positioning of the selected blade in a predefined orientation (e.g.**,** vertically downward) to facilitate safe access and handling during turbine maintenance.

There is also a further need for an automatic rotor locking system which enhances safety and accuracy during critical turbine operations such as maintenance, blade replacement, and system uninstallation.

### OBJECTIVES OF THE INVENTION:

The primary object of the present invention is to provide a system for locking a blade in a pre-determined orientation in a wind turbine generator.

Another object of the present invention is to provide a system which enables a specific blade to be positioned vertically during locking, ensuring accurate positioning of the selected blade in a predefined orientation to facilitate safe access and handling during turbine maintenance.

### SUMMARY OF THE INVENTION:

In an aspect, present invention provides a system for securely locking the blades of a wind turbine generator (WTG) in a pre-determined orientation, ensuring stability and proper positioning during maintenance or operation.

In an embodiment, the system comprises a rotor lock disc. The rotor lock disc comprises plurality of position marker means each corresponding to a one/specific blade of the wind turbine generator. The position markers means are placed near a rotor-lock hole on the rotor lock disc, with varying distance/s between each position marker means and its respective rotor-lock hole. Further, the system includes a trigger means which is movably mounted on a mounting system, with multiple predefined unique locations. At each pre-determined unique location, one of the pre-determined position marker means aligns with the trigger means. When this alignment occurs, the blade corresponding to the groove is in the pre-determined orientation and the locking pin and locking hole are aligned. When such alignment occurs, the trigger means interacts with the position marker means and triggers the locking of the rotor lock disc thereby locking the blade in the pre-determined orientation.

### DETAILED DESCRIPTION OF DRAWINGS:

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of their scope. The invention will be described and explained with additional specificity and detail with the accompanying drawings in which:
Fig. 1: illustrates a wind turbine generator;
Fig. 2: illustrates a rotor lock disc with three (3) grooves (position marker means) corresponding to each blade;
Fig. 3: illustrates a limit switch (trigger means);
Fig. 4: illustrates a perspective view of the system with blade "A" in the vertical position upon rotor locking;
Fig. 5: illustrates a perspective view of the system with blade "B" in the vertical position upon rotor locking;
Fig. 6: illustrates a perspective view of the system with blade "C" in the vertical position upon rotor locking;

### DETAILED DESCRIPTION:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

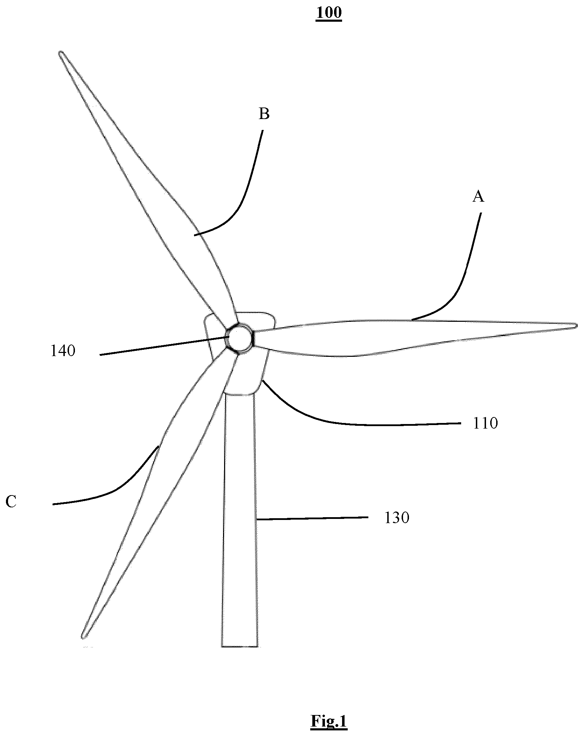

FIG. 1 illustrates a front view of a wind turbine according to an embodiment of the present invention. As shown, the wind turbine includes a tower 130 extending from the ground, a nacelle 110 mounted on the tower 130, and a rotor coupled to the nacelle. The rotor includes a rotatable hub 140 and three rotor blades (A, B, C) connected to the rotatable hub 140. Each rotor blade (A, B, C) may be spaced about the rotatable hub 140 to facilitate rotating the rotor to enable kinetic energy to be transferred from the wind into mechanical energy, and subsequently, electrical energy. For instance, the rotatable hub 140 may be rotatably coupled to an electric generator positioned within the nacelle 110 to permit electrical energy to be produced. In general, the generator is coupled to the rotor of the wind turbine for generating electrical power from the rotational energy generated by the rotor. For example, the rotor may include a main shaft coupled to the hub 140 for rotation. The generator may then be coupled to the main shaft such that rotation of the main shaft drives the generator.

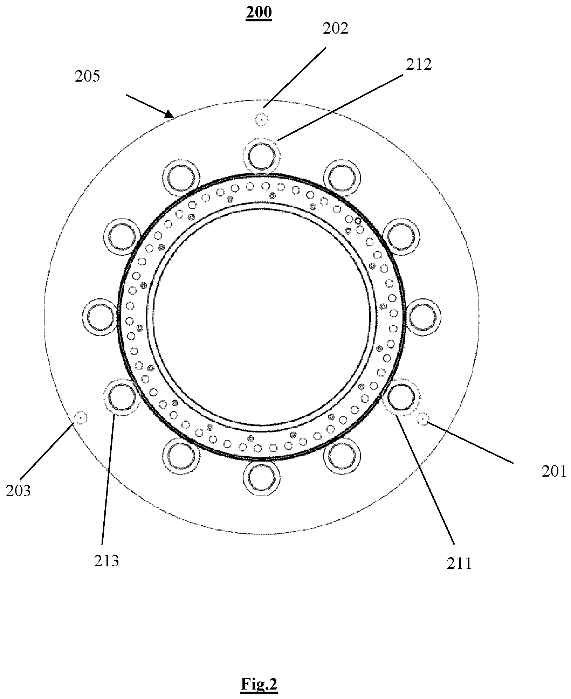

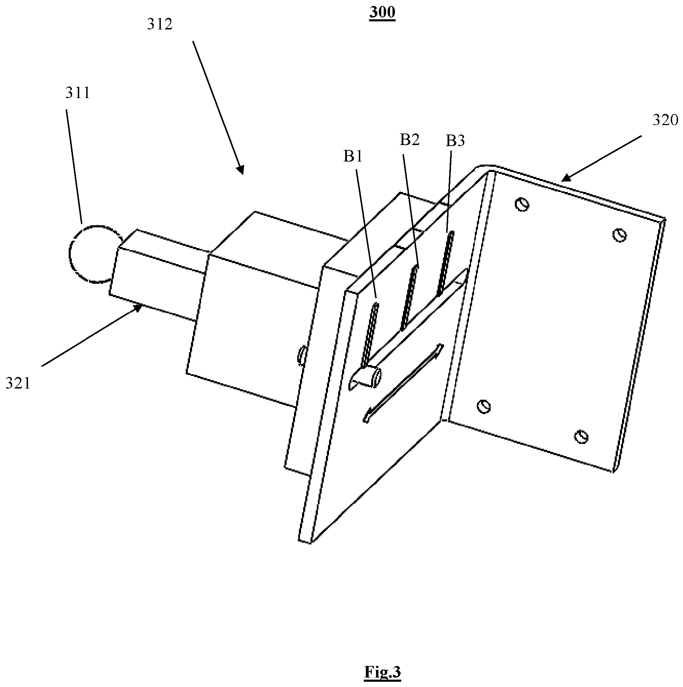

FIG. 2 illustrates a rotor lock disc with three (3) grooves (position marker means) corresponding to each blade. The rotor lock disc 205 is a component of a rotor locking mechanism that prevents the rotor blades from rotating during maintenance or when the turbine is not in operation. It is typically mounted to a flange of the rotor hub. Thus, locking of the movement of the rotor lock disc 205 locks the movement of the rotor hub. The primary function of a rotor lock disc 205, when locked, is to provide a safe and reliable means of stopping the movement of the rotor hub thereby preventing accidental movement that could cause injury or damage during maintenance or inspections. According to an embodiment, the rotor lock disc 205 comprises three position markers means 201, 202, 203. Each position marker means 201, 202, 203 corresponds to a blade A, B, C of the wind turbine generator. According to an embodiment, the position marker means 201, 202, 203 may be a groove which can accommodate a ball 311 (as shown in Fig 3) in a cavity of the groove. According to another embodiment, the position marker means 201, 202, 203 may be a transmitter sensor. According to yet another embodiment, the position marker means 201, 202, 203 may be any other such component configured to interact with a trigger means (described below). The primary function of the position marker means 201, 202, 203 is to interact with the trigger means 312 for signalling that a specific blade A, B**,** C (to which the position marker means 201, 202, 203 corresponds) is at or very near the pre-determined orientation at which the specific blade A, B, C is to be locked. According to a preferred embodiment, the pre-determined orientation at which the specific blade A, B or C is to be locked is a vertical orientation. As shown in the Fig 2, each position marker means 201, 202, 203 (groove or transmitter or the like) is placed in the vicinity of a designated rotor lock hole 211, 212, 213 in which a locking pin will be inserted to lock the rotor lock disc 205. Further, the distance of each position marker means 201, 202, 203 (groove or transmitter or the like) from the designated rotor lock holes 211, 212, 213 is different than the distance of other position marker means 201, 202, 203 from their respective designated rotor lock holes 211, 212, 213. For example, as shown in the figure, the position marker means 201 is placed at a distance of 2 inches from a designated rotor lock hole 211 nearby, the position marker means 202 is placed at a distance of 4 inches from another designated rotor lock hole 212 nearby and the position marker means 203 is placed at a distance of 6 inches from another designated rotor lock hole 213 nearby. The distances mentioned hereinabove are mentioned merely for illustrating and any distance can be used as long as it is different than the distances of other position marker means.

FIG. 3 shows a trigger means according to an embodiment of the invention. The trigger means according to an embodiment may be a limit switch device 312 movably mounted on a L-shaped mounting bracket 320 and positioned in front of the rotor lock disc 205. The limit switch device 312 is movable along a planar surface of a L-shaped mounting bracket 320. The mounting bracket 320 is further mounted to a main bearing housing.

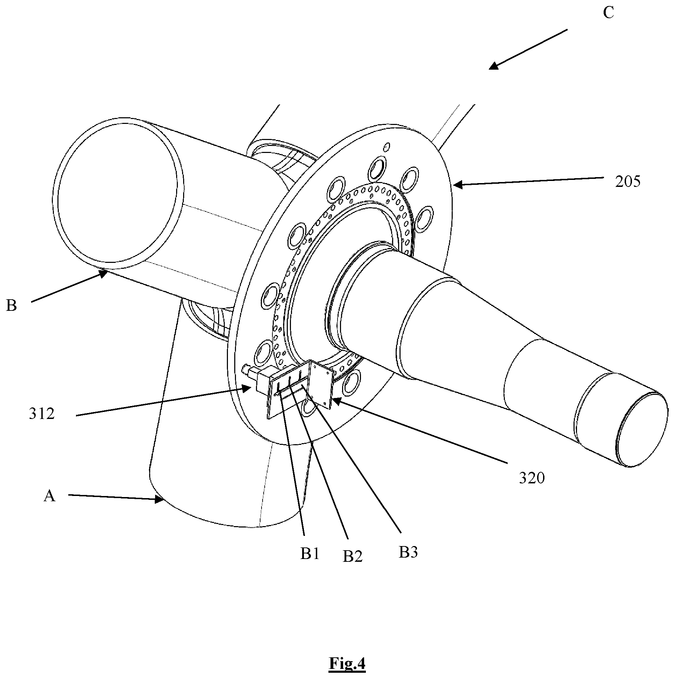

According to an embodiment and as shown in Fig 4-6, the limit switch device can be slid onto three different unique positions B1, B2, B3 on the mounting bracket 320 and locked thereon. Any known sliding/locking mechanical sliding means may be used to achieve this. At each of the unique position, one of the pre-determined groove aligns with a ball 311 of the limit switch device 312. For example, as shown in Fig 3, the location of the limit switch device should be at B1 to align itself with the groove 201, at B2 to align itself with Groove 202 and at B3 to align itself with Groove 203. The movement of the limit switch 312 device can either be done manually or through other electro mechanical means connected to the limit switch device.

According to an embodiment, the limit switch device 312 further includes spring tensioned rod 321 extending from a housing of the limit switch device 312. A metal ball 311 is affixed to the free end of the spring tensioned rod 321. The size of the metal ball 311 is such that it can be accommodated within the groove 201, 202, 203 of the rotor disc 205 described above. The spring tensioned rod 321 may be telescopic such that it can be retracted when the system is not in use or extended when the system is in use for locking the rotor lock disc 205.

According to an embodiment, the limit switch device 312 further includes a sensor mounted within or outside the limit switch device 312 housing. The sensor may be communicatively coupled to the spring tensioned rod 321 and configured to generate a signal when there is a change in the tension in the spring tensioned rod 321.

During the operation of the system, the spring tensioned rod 321 is extended such the metal ball 311 remains in contact with the surface of the rotor lock disc 205 while the rotor lock disc 205 is rotating. As soon as the metal ball 311 fits into one of the groove 201, 202, 203, it indicates an alignment of the groove and the limit switch device 312. Upon this alignment being reached, one of the blade (A, B, C) corresponding to the groove in which the metal ball 311 is accommodated, has reached a pre-determined orientation (vertical according to the preferred embodiment). Further, upon this alignment the locking pin and one of the locking hole are also aligned.

When the metal ball 311 is accommodated within the groove, a change in the spring tension is detected by the sensor within the limit switch device 312. This sensor-triggered signal indicates that one of the blade (A, B, C) corresponding to the groove in which the metal ball 311 is accommodated has reached a pre-determined orientation (vertical according to the preferred embodiment). The sensor-triggered signal also indicates that the locking pin and one of the locking hole (211, 212, 213) are also aligned. The system can now trigger locking the rotor lock disc 205. This trigger signal is passed onto a control system of the wind turbine generator which may then trigger a braking system to slowly arrest the rotational movement of the rotor lock disc 205 and then signaling the rotor locking mechanism to release the locking pin from a locking housing to enable the locking pin to be inserted into the locking hole thereby locking the rotor lock disc 205.

In an alternative embodiment, instead of the three grooves, three transmitters may be used as a position marker means. The transmitters are configured to emit electronic signals when the system is operational.

Correspondingly, in place of the limit switch device, a receiver may be used. The receiver is configured to detect signals transmitted by the transmitter when one of the transmitters and the receiver are aligned indicating that the blade has reached a pre-determined orientation (vertical) with the locking pin and one of the locking hole being aligned. In this configuration, when the receiver detects the transmitted signal, either the receiver itself or another sensor operably connected thereto can now trigger locking the rotor lock disc 205. This trigger signal is passed onto a control system of the wind turbine generator which may then trigger a braking system to slowly arrest the rotational movement of the rotor lock disc 205 and then signaling the rotor locking mechanism to release the locking pin from a locking housing to enable the locking pin to be inserted into the locking hole thereby locking the rotor lock disc 205.

In an alternative embodiment, instead of the limit switch device 312 a transmitter may be used. The transmitter is configured to emit electronic signals when the system is operational. Correspondingly, instead of the three grooves, three receivers may be used. The receivers are configured to detect signals transmitted by the transmitter when the transmitter and one of the receivers are aligned indicating that the blade has reached a pre-determined orientation (vertical) with the locking pin and one of the locking hole being aligned. In this configuration, when the transmitter detects the transmitted signal is received by the receiver, either the transmitter itself or another sensor operably connected thereto can now trigger locking the rotor lock disc 205. This trigger signal is passed onto a control system of the wind turbine generator which may then trigger a braking system to slowly arrest the rotational movement of the rotor lock disc 205 and then signal the rotor locking mechanism to release the locking pin from a locking housing to enable the locking pin to be inserted into the locking hole thereby locking the rotor lock disc 205.

Fig. 4, 5 and 6 illustrates a perspective view of the system with blade "A", B and C respectively in the vertical position when the rotor is locked.

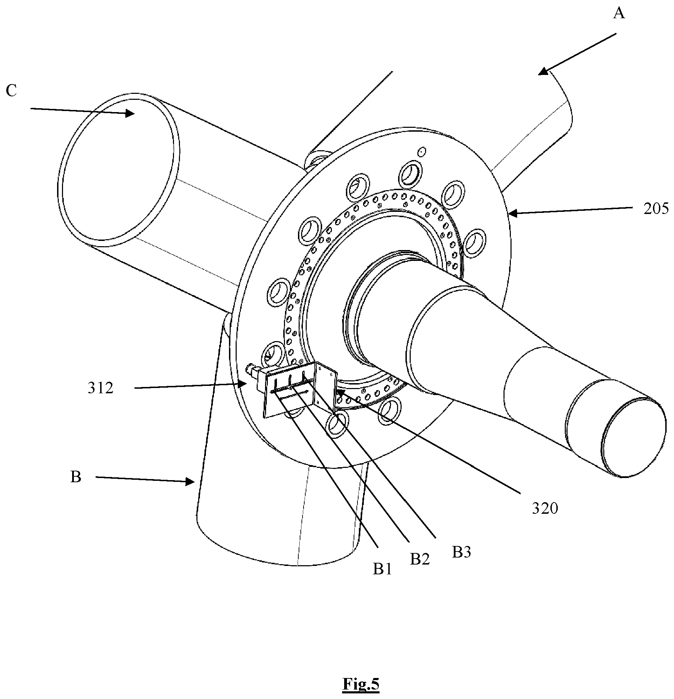

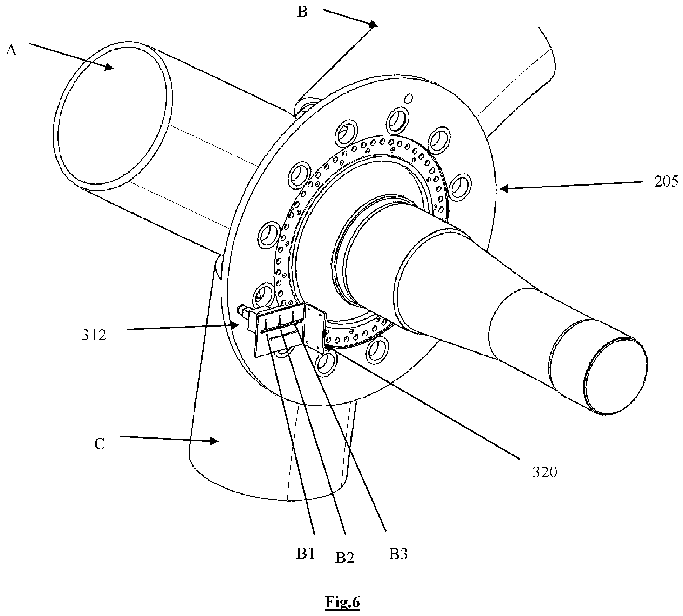

When the rotor lock disc 205 is required to be locked with blade A in vertical position, the operator may slide the position of limit switch device 312 to the marked location B1 corresponding to blade A. For blade B to be locked in vertical position, the location of the limit switch device 312 can be moved to marked location B2 as shown in Fig 5 sand similarly for blade C, the limit switch device 312 can be moved to marked location B3 as shown in Fig 6.

According to another embodiment, instead of manually moving the limit switch device 312 to the aforementioned positions B1, B2 or B3, it can be done remotely and automatically by connecting the sliding movement of the limit switch device 312 to a control systems of the wind turbine generator along with other required electromechanical components required to move the limit switch device 312 without any manual intervention. The control system may be configured to take an input from the user for selecting the blade A, B or C required to be locked based in the vertical position.

Further, when the rotor lock disc 205 is to be locked, the metal ball 311 should be in contact with the surface of the rotor lock disc 205 while the rotor lock disc 205 is rotating. As described earlier, the spring tensioned rod 321 may be telescopic such that it can be retracted when the system is not in use or extended to bring it in contact with the rotor lock disc 205 when the system is in use for locking the rotor lock disc 205.

Thereafter, while the rotor lock disc 205 is rotating, eventually the metal ball 311 will move into the groove 201 or 202 203 whichever is marked corresponding for blade A indicating that the rotor lock disc 205 is ready to be locked with blade A is in vertical orientation and the locking pin and one of the locking hole being aligned.

Since the distance between the locking hole 211, 212, 213 and the other grooves 201, 202, 203 are different and the position of the limit switch device 312 is unique, the other grooves marked corresponding to the blade B and blade C will never align with the metal ball 311 while the rotor lock disc 205 is rotating before being locked and therefore will never trigger locking of the rotor lock disc 205 for locking the rotor lock disc 205 when the blade B or C is in vertical orientation. Thus, the locking of rotor lock disc 205 will be triggered only when the blade A is in the vertical orientation.

As described above, when the metal ball 311 is accommodated within the groove, a change in the spring tension is detected by the sensor within the limit switch device 312. This triggers the locking of the rotor lock disc 205 with a signal to the control system of the wind turbine generator which may then trigger a braking system to slowly arrest the rotational movement of the rotor lock disc 205 and then signaling to release the locking pin from a locking housing to enable the locking pin to be inserted into the locking hole thereby locking the rotor lock disc 205.

The lock pin mechanism is responsible for securing the rotor and preventing rotation during maintenance or uninstallation. This mechanism is driven by an actuator, such as a screw jack or electronically, which inserts the lock pin into one of the grooves on the rotor lock disc. The lock pin serves as a mechanical barrier to prevent the rotor from rotating, thus ensuring safety for workers and allowing the turbine to be safely serviced.

The locking system, described in the present specification, enables the wind turbine rotor to be locked with a pre-determined blade locked in pre-determined orientation of the blade in a simple and easy manner.

An advantage of this system is the ability to select which blade should be locked when it is in a pre-determined (vertical) orientation. The combination of the placement of grooves on the rotor lock disc and the corresponding unique location of the movable limit switch device allows the system to lock any of the blades at a specific angular position, such as the vertical position, during maintenance operations. This enhances operational flexibility and ensures that the correct blade is locked for each task.

The system is designed to integrate easily with conventional rotor lock disc setups, making it a practical retrofit solution for existing wind turbines. It does not require significant modifications to the turbine's existing hardware, thus reducing installation costs and downtime.

Many modifications and other embodiments of the invention set forth herein will readily occur to one skilled in the art to which the invention pertains to having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from the practice of the invention. The embodiments were chosen and described in order to explain the principles of the invention and its practical application to enable one skilled in the art to utilize the invention in various embodiments and with various modifications as are suited to the particular use contemplated.

## Claims

1. A system for locking a blade in a pre-determined orientation in a wind turbine generator (WTG), the system comprising:
a) a rotor lock disc (205), the rotor lock disc (205) comprising a plurality of position marker (201, 202, 203) means, each corresponding to a blade (A, B, C), placed in the vicinity of a rotor-lock hole (211, 212, 213) on the rotor lock disc (205) such that the distance of one position marker means (201) from the rotor-lock hole (211) is different than the distance of other position marker means (202, 203) from their respective rotor-lock holes (212, 213);
b) a trigger means (312) configured to be movably mounted on a mounting means 320 at a plurality of pre-determined unique locations (B1, B2, B3) thereon, wherein at each pre-determined unique location (B1, B2, B3):
- one of the pre-determined position marker means (201, 202, 203) aligns with the trigger means (312)
wherein upon said alignment, one of the blades (A, B, C) corresponding to the position marker means being in the pre-determined orientation and the locking pin being aligned with the locking hole;
wherein upon said alignment, the trigger means (312) configured to interact with the position marker means (201, 202, 203) for triggering a locking of the rotor lock disc (205).

2. The system as claimed in claim 1, wherein the triggering of the locking of the rotor lock disc (205) includes:
a) sending a signal, through a sensor within the trigger means (312), to a braking system in the WTG for arresting the movement of the rotor lock disc (205); and
b) sending a signal through the sensor within the trigger means (312), to the locking pin mechanism to release the locking pin for inserting thereof in the rotor lock hole thereby locking the rotor lock disc (205).

3. The system as claimed in claim 1, wherein the position marker means (201, 202, 203) includes grooves;
the trigger means includes a limit switch device (312) comprising:
a spring tensioned rod having a ball (311) at its free end wherein upon the alignment of the groove and the ball (311) the interaction includes the ball (311) moving into the groove thereby causing a change in a spring tension of the spring tensioned rod;
a sensor communicatively coupled to the spring tensioned rod 321 for detecting a change in a spring tension wherein upon detecting a change in the spring tension the sensor configured to trigger a locking of the rotor lock disc (205) for triggering a locking of the rotor lock disc (205).

4. The system as claimed in claim 1, wherein
the position marker means (201, 202, 203) includes a transmitter configured to transmit electronic signals;
the trigger means includes a receiver configured to detect signals transmitted from the transmitter,
wherein upon the alignment of the transmitter and the receiver with one of the blades being in the pre-determined orientation, the interaction includes the receiver detecting signals from the receiver and triggering a locking of the rotor lock disc (205).

5. The system as claimed in claim 1, wherein the pre-determined orientation is a vertical orientation.
